Europäisches Patentamt

European Patent Office

Office européen des brevets

(11) Publication number: **0 140 524**
**B1**

# EUROPEAN PATENT SPECIFICATION

(45) Date of publication of patent specification: 01.06.88

(51) Int. Cl.⁴: **G 11 B 5/31,** G 11 B 5/29

(21) Application number: 84305841.3

(22) Date of filing: 24.08.84

(54) **Multi channel magnetic transducer head and method of manufacturing same.**

(30) Priority: 29.08.83 JP 157650/83

(43) Date of publication of application:
08.05.85 Bulletin 85/19

(45) Publication of the grant of the patent:
01.06.88 Bulletin 88/22

(84) Designated Contracting States:
DE FR GB NL

(56) References cited:
DE-B-2 600 630
FR-A-2 535 098
GB-A-1 525 007
US-A-4 065 797

(73) Proprietor: SONY CORPORATION
7-35 Kitashinagawa 6-Chome Shinagawa-ku
Tokyo 141 (JP)

(72) Inventor: Fuse, Takeyuki
Sony Magnetic Products in Corp. 5-6,
Kitashinagawa
6-chome, Shinagawa-ku Tokyo (JP)
Inventor: Abe, Iwao
Sony Magnetic Products in Corp. 5-6,
Kitashinagawa
6-chome, Shinagawa-ku Tokyo (JP)
Inventor: Wakabayashi, Noboru
Sony Magnetic Products in Corp. 5-6,
Kitashinagawa
6-chome, Shinagawa-ku Tokyo (JP)
Inventor: Suyama, Hideo
c/o Sony Corporation, 7-35 Kitashinagawa
6-chome, Shinagawa-ku, Tokyo (JP)
Inventor: Imakoshi, Shigeoyoshi
c/o Sony Corporation, 7-35 Kitashinagawa
6-chome, Shinagawa-ku, Tokyo (JP)
Inventor: Soda, Yutaka
c/o Sony Corporation, 7-35 Kitashinagawa
6-chome, Shinagawa-ku, Tokyo (JP)

(74) Representative: Ayers, Martyn Lewis Stanley
et al
J.A. KEMP & CO. 14 South Square Gray's Inn
London, WC1R 5EU (GB)

Courier Press, Leamington Spa, England.

## Description

The present invention relates to multi channel magnetic transducer heads, and more particularly to a thin film type magnetic transducer head manufactured using thin film forming techniques. US-A-4092688 shows an example of a multi track magnetic head wherein a non magnetic spacer is provided between upper and lower magnetic material layers, there being additional thickness of spacer material at given positions to provide magnetic gaps.

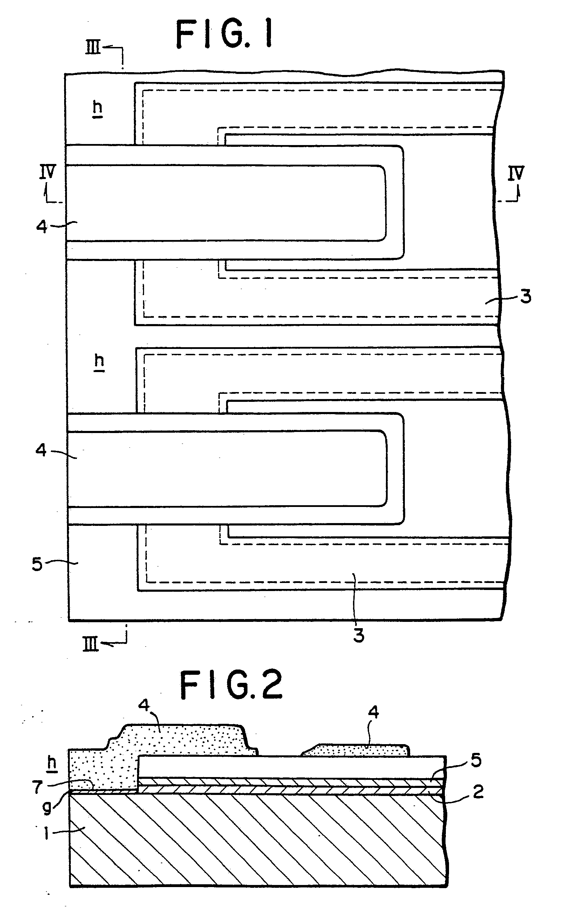

Referring to Figures 1 through 4 of the accompanying drawings, a thin film type multi channel magnetic transducer head in the prior art, for example, that of electromagnetic induction type, comprises a magnetic substrate 1 made of magnetic ferrite, such as Mn-Zn ferrite or Ni-Zn ferrite, and a coil conductor 3 as a head winding formed on a main surface of the magnetic substrate 1 through an insulation film 2 of $SiO_2$ or $Si_3N_4$ with thickness 1 μm. The coil conductor 3 is formed by a U-shaped conductive layer of Al, Cu or Au. Although the example discloses the coil conductor having a single turn, construction with several spiral turns or several multi layer turns may be used. An insulation film 5 of $SiO_2$ or $Si_3N_4$ with thickness 1 μm is formed on whole surface of the coil conductor 3, and a thin film magnetic core 4 crosses the coil conductor 3 through the insulation film 5 and front end of the thin film magnetic core 4 extends to a surface S faced to a magnetic recording medium. The thin film magnetic core 4 is formed by a magnetic thin film of sendust or permalloy having width 60 μm and thickness 10 μm. The rear end of the thin film magnetic core 4 passes through a window 6 bored on the insulation films 2 and 5 and is attached to the magnetic substrate 1 directly, for example, and magnetically connected to the substrate 1 in close connection. A non-magnetic gap spacer 7 with thickness 0.5 μm to constitute an effective magnetic gap g is formed between the front end of the thin film magnetic core 4 and the magnetic substrate 1. Thus a magnetic circuit is constituted which includes the magnetic gap g with gap length specified by thickness of the gap spacer layer 7 and forms a closed magnetic circuit in cooperation of the thin film magnetic core 4 and the magnetic substrate 1, and a magnetic head element h is provided with the coil conductor 3 crossing the magnetic circuit. A plurality of magnetic head elements h of such construction are arranged on the substrate side by side, the number of them corresponding to the required number of tracks, and each magnetic gap g faces the common surface S facing the magnetic recording medium at a predetermined track interval.

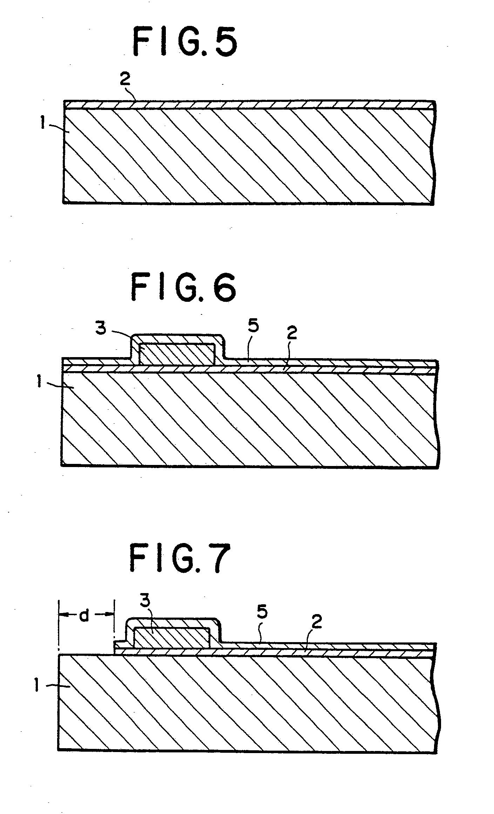

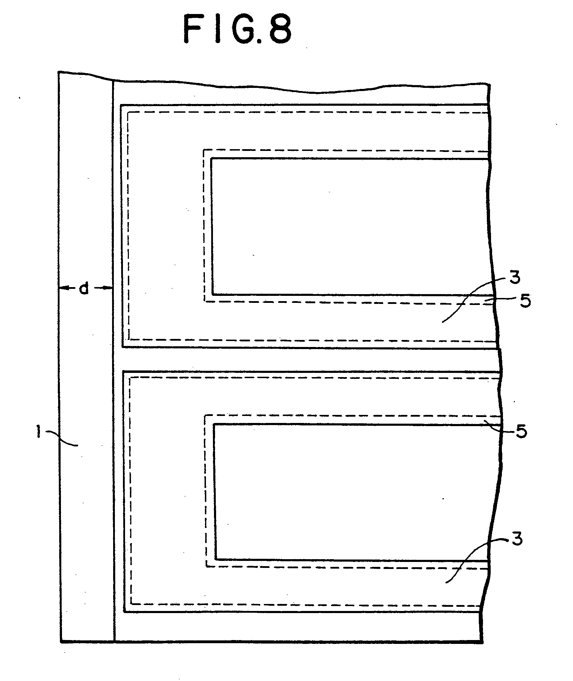

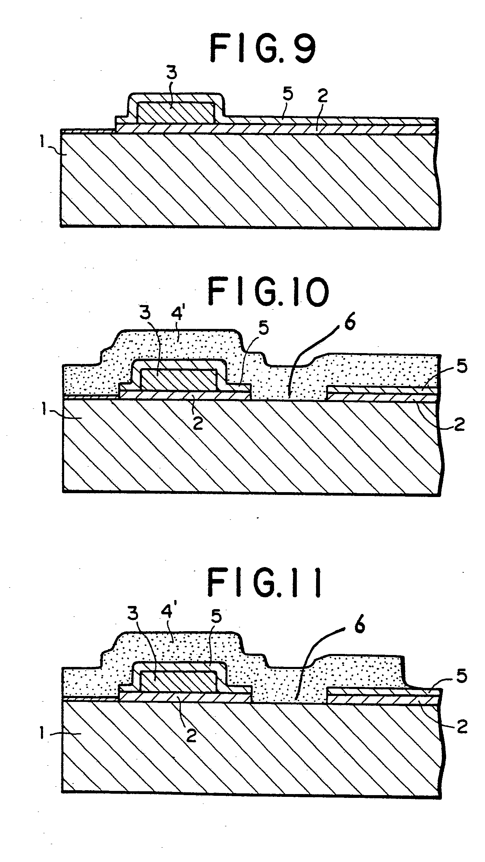

The process of manufacturing a multi element thin film magnetic head such as that of Figure 1 will now be described. First, a magnetic substrate 1 is coated by an insulation film 2 as shown in Figure 5. A coil conductor 3 is arranged on a predetermined position of the insulation film 2, and an insulating film 5 is applied to the whole surface including that of the coil conductor 3 as shown in Figure 6. Part of the insulating films 2 and 5, where a gap spacer layer 7 as hereinbefore described is to be formed, is selectively removed to a predetermined width along the front side edge of the substrate 1, i.e. to width d corresponding to the gap depth of the magnetic gap g to be formed finally, by etching using photolithography as shown in the sectional view of Figure 7 and the plan view of Figure 8. The removed portion of the insulation films 2 and 5 is coated with a non-magnetic gap spacer layer 7 of a predetermined thickness, i.e. a thickness corresponding to the gap length of the magnetic gap g, such as thickness 0.5 μm as shown in Figure 9. A window 6 is bored on the insulation films 2 and 5 and a magnetic thin film 4' of sendust or permalloy to constitute a magnetic core is formed on the whole surface by means of sputtering as shown in Figure 10. The unnecessary portion of the thin film 4' is removed by etching using photolithography and the thin film magnetic core 4 of predetermined pattern is formed as shown in Figure 11 and described referring to Figures 1 through 4.

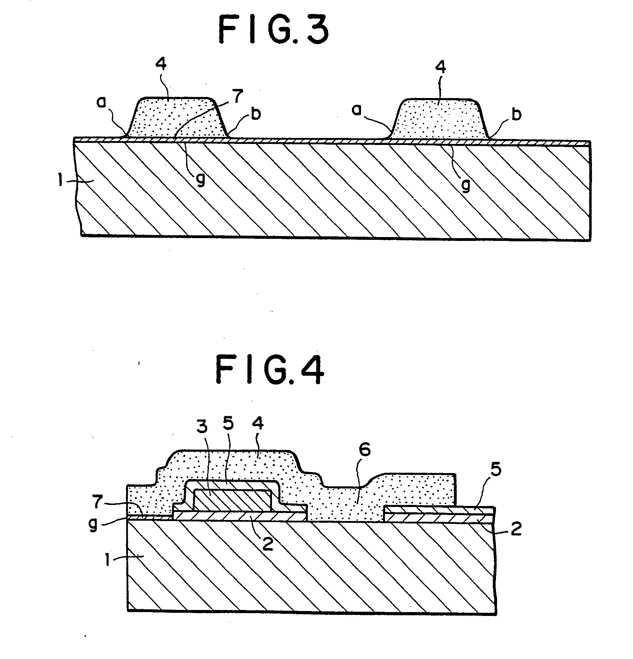

In the above described process, the thin film magnetic cores 4 associated with various tracks are formed simultaneously. In this case, since the magnetic core 4 i.e. the magnetic thin film 4' must have as small a magnetic resistance as possible, the thickness thereof is selected as large as possible, for example, 10 μm. Therefore, during patterning of the magnetic film 4', i.e. etching using photolithography, the etching progresses not only in thickness direction of the magnetic thin film 4' but also in surface direction. That is, so-called side etching is caused whereby the edge of the pattern has trailing shape. As shown in Figure 3 trailing edges a and b are produced on both sides of the magnetic gap g in the track width direction, whereby the track width of the magnetic gap g cannot be determined accurately and variation occurs. In the case of multiple tracks, the etching is not performed well but the thin film magnetic cores 4 of various tracks may be magnetically connected with each other by the thin layer of the magnetic film. Particularly, as the guard band width decreases as the track spacing is reduced, this problem is made more acute. If the track width cannot be determined accurately, the high density recording which is the original object of the thin film magnetic transducer head cannot be attained and serious problem in characteristics may occur. Moreover, good magnetic recording cannot be performed.

It is an object of the present invention to provide an improved multi channel magnetic transducer head.

According to one aspect of the present invention there is provided a multi channel magnetic transducer head comprising a magnetic substrate, and a plurality of magnetic cores formed on said substrate and aligned along one end of said substrate with effective magnetic gaps between said substrate and said plurality of magnetic cores at said one edge of said substrate which in use of the head, is to face a magnetic recording medium to form a plurality of magnetic transducer head elements, said effective magnetic gaps being formed by providing non-magnetic gap spacers having a predetermined thickness, said substrate being provided with non-magnetic layers between each of said magnetic cores at said one edge of said substrate characterised in that said non-magnetic layers have a thickness larger than said non-magnetic gap spacers and in that the magnetic cores overlie and are at least as wide as the associated non-magnetic gap spacers.

The invention will be further described by way of example with reference to the accompany drawings, in which:

Figure 1 is a plan view of a prior art multi channel thin film magnetic head;

Figure 2 is a side of the magnetic head in Figure 1;

Figure 3 is a sectional view taken in line III-III of Figure 1;

Figure 4 is a sectional view taken in line IV-IV of Figure 1;

Figure 5, Figure 6, Figure 7, Figure 9, Figure 10 and Figure 11 are sectional views illustrating an example of manufacturing process of the magnetic head in Figure 1;

Figure 8 is a plan view illustrating an example of manufacturing process of the magnetic head in Figure 1;

Figure 12 is a plan view of a multi channel thin film type magnetic head embodying the invention;

Figure 13 is a side view of the magnetic head in Figure 12;

Figure 14 is a sectional view taken in line XIV-XIV of Figure 12;

Figure 15 is a sectional view taken in line XV-XV of Figure 12;

Figure 16 is a plan view illustrating an example of manufacturing process of the magnetic head in Figure 12; and

Figure 17 is a sectional view illustrating an example of manufacturing process of the magnetic head in Figure 12.

The illustrated multi channel magnetic transducer head embodying the present invention comprises a magnetic substrate and a plurality of thin film type magnetic transducer head elements arranged on the magnetic substrate, wherein each magnetic transducer head element is composed of a coil conductor disposed on the magnetic substrate and a thin film magnetic core to constitute a magnetic circuit in co-operation with the magnetic substrate. Non-magnetic gap spacer layers of a predetermined thickness are formed at track width intervals at front end of the thin film magnetic cores on the magnetic core, a non-magnetic layer with thickness larger than that of the gap spacer layer being formed at each track spacing portion. The thin film magnetic core has a width covering at least the gap spacer layer of the track width portion, whereby good magnetic recording can be performed.

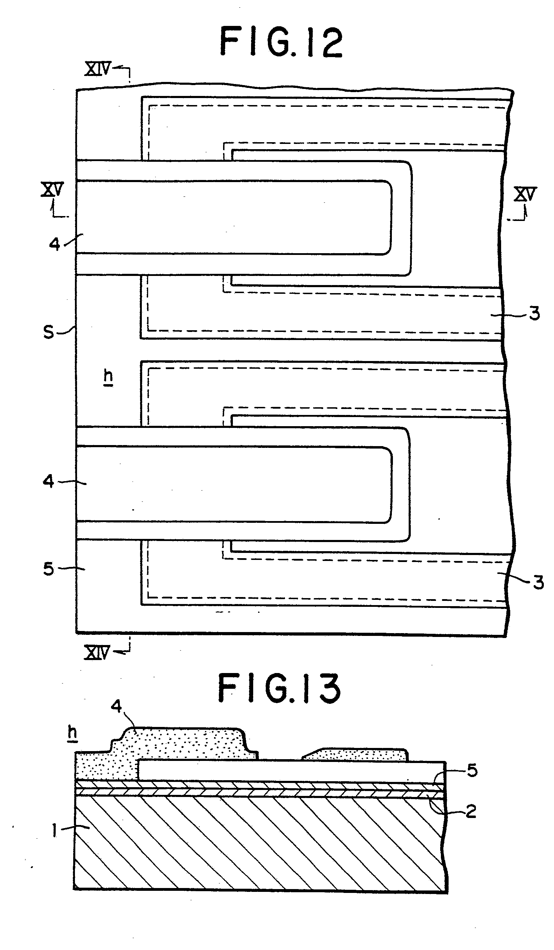

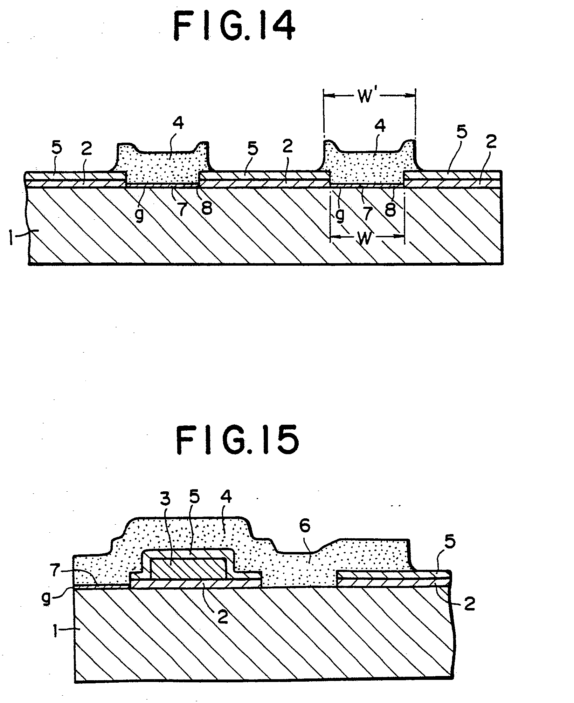

A multi channel magnetic transducer head embodying the invention will now be described referring to the accompanying drawings. Figure 12 is a plan view of an embodiment; Figure 13 is a side view of Figure 12; Figure 14 is a sectional view taken in line XIV-XIV of Figure 12; and Figure 15 is a sectional view taken in line XV-XV of Figure 12. In these figures, parts corresponding to Figures 1 through 4 are designated by like numerals and detailed description thereof shall be omitted.

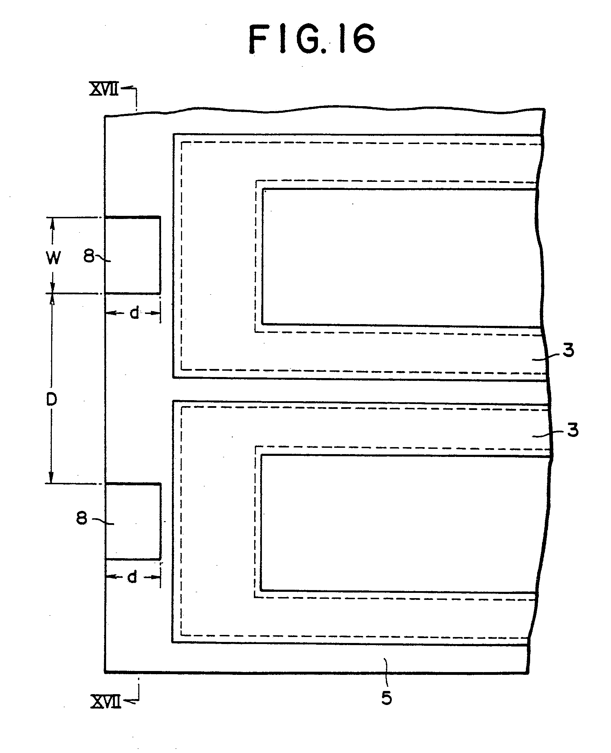

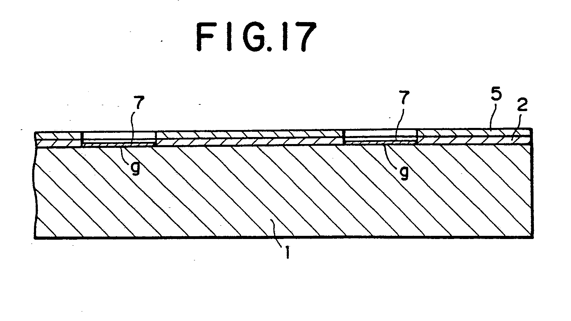

The multi channel magnetic transducer head in the embodiment is manufactured in process similar to that described referring to Figures 5 through 11. In the embodiment, however, pattern of selective removing of the insulation films 2 and 5 for the formation of the gap spacer layer 7 is different from that of the prior art shown in Figure 7 through 9. As shown in the plan view of Figure 16 and the sectional view of Figure 17 taken on line XVII-XVII of Figure 16, in the embodiment, parts of the insulation films 2 and 5, where the gap spacer layer 7 is to be formed, are removed by etching using photolithography, such that particular portions 8 are formed respectively associated with each track. The width W of the removed portions 8 is selected as the width of the track and depth d of the portion 8 is selected as the gap depth. The distance D between the removed portions 8 is selected as the distance between the tracks. The gap spacer layer 7 of predetermined thickness, i.e. a thickness corresponding to the gap length of the magnetic gap g, is formed at least within the removed portion 8. The magnetic thin film 4' is formed on the whole surface including that on the gap spacer layer 7 within the removed portion 8, and then patterning is performed by etching using photolithography so as to form the thin film magnetic core shown in Figures 12 and 15. In this case, the width W' of the thin film magnetic core 4 is selected to be larger than the width W of the removed portion 8 as shown in Figure 14, so that the magnetic core 4 is formed on the surface including at least that on the removed portion 8. Furthermore, the magnetic core 4 extends over a non-magnetic layer which is formed by lamination of the insulation films 2 and 5 outside the removed portion 8 and has sufficiently large thickness in comparison to the gap spacer 7. In this case, since the insulation films as a whole have a thickness sufficiently larger than that of the gap spacer layer 7 but less than that of the magnetic thin film 4' as to constitute the thin film magnetic core 4, selective etching can be performed at high accuracy without producing side etching.

In the thin film type multi track magnetic transducer head of such construction, since the required thin gap spacer layer 7 is formed limitatively on the removed portion 8 of the insulation films 2 and 5, the track width of the magnetic gap g formed between the thin film magnetic core 4 on the gap spacer layer 7 and the magnetic substrate 1 is specified precisely by the width W of the removed portion 8. That is, in the portion of the thin film magnetic core 4 extending outside the removed portion 8, a substantially thick non-magnetic layer exists on account of lamination of the insulation films 2 and 5 and therefore the magnetic gap of the magnetic medium scarcely acts here. Consequently, even if side etching is produced during the patterning of the magnetic thin film 4' and the trailing portions a and b exist in the magnetic core 4, the track width of the gap g does not become inaccurate and variation does not occur.

Although, in the above-mentioned embodiment, areas of insulation films 2 and 5 are removed through their full depths to provide the removed portions 8 and then the gap spacer 7 is formed on the removed portion 8, the insulation films 2 and 5 may be partly removed to a depth corresponding to part of the lamination thickness and the gap spacer layer 7 may be formed using the residual thickness.

In the above embodiment also, in place of etching used in the manufacturing process to form the thin film magnetic core 4 in a predetermined shape, a lift-off method may be used.

Although application to the magnetic transducer head of electromagnetic induction type is disclosed in the above embodiment, the invention can be applied also to the magnetic transducer head of the magnetoresistance effect type.

## Claims

1. A multi channel magnetic transducer head comprising a magnetic substrate (1), and a plurality of magnetic cores (4) formed on said substrate and aligned along one end of said substrate with effective magnetic gaps (g) between said substrate and said plurality of magnetic cores (4) at said one edge of said substrate which in use of the head, is to face a magnetic recording medium to form a plurality of magnetic transducer head elements, said effective magnetic gaps (g) being formed by providing non-magnetic gap spacers (7) having a predetermined thickness, said substrate being provided with non-magnetic layers (2, 5) between each of said magnetic cores at said one edge of said substrate characterised in that said non-magnetic layers (2, 5) have a thickness larger than said non-magnetic gap spacers (7) and in that the magnetic cores (4) overlie and are at least as wide as the associated non-magnetic gap spacers (7).

2. A head according to claim 1 wherein said spacers (7) are formed in spaced apart areas (8) along said edge of the substrate (1) at which said non-magnetic layers are either absent or thinner than along the remainder of said one edge.

3. A method of manufacturing a transducer head according to claims 1 or 2 characterised by the steps, after the non-magnetic layers have been formed, of at least partially removing said non-magnetic layers at discrete areas which spaced along said edge of the substrate.

## Patentansprüche

1. Magnetwandlerkopf für mehrere Kanäle, mit einem magnetischen Substrat (1) und mehreren Magnetkernen (4), die auf dem Substrat gebildet sind und längs eines Endes des Substrats ausgerichtet sind, mit Arbeits-Magnetspalten (g) zwischen dem Substrat und den mehreren Magnetkernen (4) längs des einen Randes des Substrates der im Betrieb des Kopfes einem Magnetaufzeichnungsmedium gegenüberzuliegen hat zur Bildung mehrerer Magnetwandlerkopfelemente, wobei die Arbeitsmagnetspalte (g) durch Vorsehen nicht magnetischer Spalt-Abstandsglieder (7) vorgegebener Dicke gebildet sind, wobei das Substrat mit nichtmagnetischen Schichten (2, 5) zwischen jedem der Magnetkerne an dem einen Rand des Substrat versehen ist, dadurch gekennzeichnet, dass die nichtmagnetischen Schichten (2, 5) eine grössere Dicke als die Spalt-Abstandsglieder (7) besitzen und dass die Magnetkerne (4) die zugehörigen nichtmagnetischen Spalt-Abstandsglieder (7) überlagern und mindestens so breit wie diese sind.

2. Ein Kopf nach Anspurch 1, bei dem die Abstandsglieder (7) in voneinander beabstandeten Bereichen (8) längs des Randes des Substrats (1) gebildet sind, an denen die nichtmagnetischen Schichten entweder nicht vorliegen oder dünner sind, als am verbleibenden Rest dieses einen Randes.

3. Ein Verfahren zum Herstellen eines Wandlerkopfes nach Anspruch 1 oder 2, gekennzeichnet dadurch die Schritte nach dem Bilden der nichtmagnetischen Schichten, zumindest teilweise diese nichtmagnetischen Schichten an diskreten Bereichen zu entfernen, die längs des Randes des Substrates beabstandet sind.

## Revendications

1. Tête de transducteur magnétique à canaux multiples, comprenant un substrat magnétique (1), et plusieurs noyaux magnétiques (4) formés sur ledit substrat et alignés suivant une première extrémité dudit substrat avec des entrefers magnétiques effectifs (g) entre ledit substrat et lesdits noyaux magnétiques (4) au niveau dudit premier bord dudit substrat, qui, lors de l'utilisation de la tête, est en regard d'un support d'enregistrement magnétique afin de former plusieurs éléments de tête de transducteur magnétique, lesdits entrefers magnétiques effectifs (g) étant formés par la mise en place d'éléments d'écartement constituant des entrefers, ou intervalles, non magnétiques (7) d'une épaisseur prédéterminée, ledit substrat étant doté de couches non magnétiques (2, 5) entre chacun desdits noyaux magnétiques au niveau dudit premier bord dudit substrat, caractérisée en ce que lesdites couches non magnétiques (2, 5) ont une épaisseur plus grande que lesdits éléments d'écartement constituant des intervalles non magnétiques (7), et en ce que les noyaux magnétiques (4) s'étendent au-dessus des éléments d'écartement constituant des intervalles non magnétiques associés (7) et sont au moins aussi larges que ceux-ci.

2. Tête selon la revendication 1, où lesdits éléments d'écartement (7) sont formés dans des aires mutuellement écartées (8) le long dudit bord du substrat (1) au niveau duquel lesdites couches non magnétiques sont soit absentes, soit plus minces que le long du reste dudit bord.

3. Procédé de fabrication d'une tête de transducteur selon la revendication 1 ou 2, caractérisé par les opérations consistant, après que les couches non magnétiques ont été formées, à enlever au moins partiellement lesdites couches non magnétiques au niveau d'aires distinctes qui sont écartées le long dudit bord du substrat.

# FIG. 1

# FIG. 2

# FIG.3

# FIG.4

# FIG.5

# FIG.6

# FIG.7

# FIG.8

# FIG.9

# FIG.10

# FIG.11

# FIG.12

# FIG.13

# FIG.14

# FIG.15

# FIG.16

# F I G.17